Europäisches Patentamt

European Patent Office

Office européen des brevets

(19)

(11) Numéro de publication: **0 040 995**
**B1**

(12) ## FASCICULE DE BREVET EUROPEEN

(45) Date de publication du fascicule du brevet:
04.04.84

(51) Int. Cl.³: **G 11 B 7/12**

(21) Numéro de dépôt: **81400689.6**

(22) Date de dépôt: **30.04.81**

(54) **Dispositif optique d'enregistrement-lecture sur un support d'informations.**

(30) Priorité: **28.05.80 FR 8011801**

(43) Date de publication de la demande:
**02.12.81 Bulletin 81/48**

(45) Mention de la délivrance du brevet:
**04.04.84 Bulletin 84/14**

(84) Etats contractants désignés:
**DE GB IT NL SE**

(56) Documents cités:
**EP - A - 0 023 868**
**DE - A - 2 634 243**
**DE - A - 2 801 062**
**FR - A - 2 332 577**
**FR - A - 2 412 133**
**FR - A - 2 440 055**
**US - A - 4 027 330**

**PATENTS ABSTRACTS OF JAPAN, vol. 3, no. 98, 18 août 1979, page 97 E 131**
**PATENTS ABSTRACTS OF JAPAN, vol. 5, no. 42, 20 mars 1981, page 53(714)**

(73) Titulaire: **THOMSON-CSF, 173, Boulevard Haussmann, F-75379 Paris Cedex 08 (FR)**

(72) Inventeur: **Leterme, Dominique, THOMSON-CSF SCPI 173, bld Haussmann, F-75360 Paris Cedex 08 (FR)**
Inventeur: **Lemerer, Jean-Pierre, THOMSON-CSF SCPI 173, bld Haussmann, F-75360 Paris Cedex 08 (FR)**

(74) Mandataire: **Lepercque, Jean et al, THOMSON-CSF SCPI 173, Bld Haussmann, F-75379 Paris Cedex 08 (FR)**

BUNDESDRUCKEREI BERLIN

## Dispositif optique d'enregistrement-lecture sur un support d'informations

L'invention se rapporte à un dispositif d'enregistrement-lecture de support d'information.

L'invention concerne plus particulièrement les systèmes enregistreurs-lecteurs dans lesquels le support d'information est un disque. Actuellement on peut enregistrer environ $10^{10}$ éléments binaires d'information sur un disque d'une trentaine de centimètres de diamètre. Ces systèmes peuvent être utilisés comme mémoire de masse pour des ensembles de traitement numérique de données. Ces systèmes doivent permettre un accès aléatoire à une partie prédéterminée des données enregistrées, par exemple un bloc de mots binaires de longueur fixe ou variable. D'autre part la vitesse de calcul des unités de traitement de l'information nécessite de nombreux échanges entre les mémoires périphériques et ces unités de calcul. Il est donc nécessaire que l'accès à une piste prédéterminée d'un support d'informations mobile se fasse dans le temps le plus court possible, ce aussi bien pour lire des informations préenregistrées, que pour enregistrer de telles informations, quelque soit la position de cette piste sur le disque. Typiquement le temps moyen d'accès doit être inférieur à 100 millisecondes.

Les dispositifs d'accès à une piste actuellement réalisés sont essentiellement destinés à des disques sur lesquels l'information enregistrée contient un signal vidéo sous forme numérique. Le temps d'accès à l'information est dans ces systèmes de l'ordre de quelques secondes, ce qui est suffisant pour cette application.

Dans les dispositifs d'accès antérieurement connus le positionnement radial correct d'une tête d'enregistrement et/ou lecture optique est réalisé par des moyens mécaniques assurant soit le déplacement de cette tête, soit le plus souvent le déplacement du disque. Lorsque la tête de lecture et le disque sont correctement positionnés l'un par rapport à l'autre, le suivi radial de la piste circulaire ou en hélice sur laquelle doit être (ou est) enregistrée l'information est réalisé à l'aide d'un miroir galvanométrique mobile autour d'un axe parallèle au plan du disque et qui réfléchit un faisceau produit par au moins une source d'énergie rayonnante comprenant un laser. La tête comporte également un dispositif assurant l'asservissement vertical de l'objectif servant à l'enregistrement-lecture. Dans la réalité deux sources sont le plus souvent prévues: une pour la lecture et une pour l'enregistrement.

Quelles que soient les dispositions retenues, l'équipage mobile a une masse trop importante pour être compatible avec les temps d'accès moyens souhaités en informatique. A titre d'exemple, dans le procédé consistant à déplacer le disque, celui-ci étant solidaire d'un mécanisme tournant, comprenant notamment le moteur d'entrainement, une masse de l'ordre de 1 kg doit être mise en mouvement. Pour améliorer le temps d'accès on peut utiliser un dispositif dans lequel seule la tête d'enregistrement-lecture est mobile, la source d'énergie à lasers restant fixe et comprenant par exemple des moyens optiques de type afocal assurant le couplage optique entre la source d'énergie lumineuse et la tête d'enregistrement-lecture.

Un tel dispositif, décrit dans la demande de brevet EP-A-0 023 868, qui appartient à l'état de la technique visé à l'article 54 (3), comporte un équipage mobile comprenant un miroir galvanométrique et un objectif de focalisation, mobile par rapport au support d'information, et deux sources d'énergie rayonnantes fixes comprenant chacune un émetteur laser. Les moyens optiques grossissant de type afocal sont insérés entre l'équipage mobile et les sources d'énergie rayonnants; le grossissement étant suffisant pour que le faisceau émergeant des moyens optiques recouvre en totalité la pupille d'entrée de l'objectif. Par cette disposition, le faisceau qui atteint l'équipage mobile reste un faisceau de rayons parallèles, quelque soit la position de cet équipage par rapport aux sources d'énergie rayonnantes. La lecture et le contrôle de l'enregistrement s'effectuent par détection de l'intensité des faisceaux réfléchis par la surface des zones lues ou enregistrées.

Le dispositif qui vient d'être décrit est parfaitement adapté à la mise en œuvre de lasers à gaz. Il n'en est pas de même si on utilise les sources à laser semiconducteurs qui ont été introduites plus récemment. Ces lasers nécessitant une optique collimatrice sont équivalents à une source de grand diamètre utile d'émission. Il n'est plus possible d'utiliser un afocal. Les deux faisceaux parallèles, respectivement de lecture et d'enregistrement, émis par les deux sources correspondantes et combinées en un faisceau composite, devant être très faiblement inclinés l'un par rapport à l'autre, il devient très difficile de détecter séparément ces deux faisceaux, ce dans des dispositifs présentant un faible encombrement. De grandes distances sont en effet nécessaire avant d'obtenir une séparation complète des faisceaux.

Un dispositif dans lequel un faisceau composite est obtenu à partir de l'émission d'un laser du type semi-conducteur peut être illustré par référence à la demande de brevet DE-A-2 634 243. Cependant, outre le fait que le faisceau composite est obtenu à partir d'un seul laser, les dispositions retenues ne permettent ni d'obtenir une bonne compacité, ni un rendement énergétique satisfaisant.

L'invention, tout au contraire, propose un dispositif d'enregistrementlecture restant compact, permettant une parfaite séparation des faisceaux d'enregistrement et de lecture réfléchis, et conservant un rendement énergétique satisfaisant.

L'objet de l'invention est donc un dispositif optique d'enregistrement-lecture de support d'informations, du type comportant deux sources d'énergie rayonnantes fixes à laser semiconducteur de longueur d'onde déterminée, la première source émettant un premier faisceau utilisé pour la lecture d'informations enregistrées sur le support d'informations et la seconde source émettant un second faisceau utilisé pour l'enregistrement d'information sur le support d'information, dispositif dans lequel l'enregistrement et la lecture s'effectuent au moyen d'une tête d'enregistrement-lecture solidaire d'un équipage mobile par rapport au support d'informations et comprenant un objectif recevant lesdits faisceaux se propageant suivant deux directions formant entre elles un angle de faible amplitude et dont la combinaison forme un faisceau composite, cet objectif focalisant en des zones prédéterminées du support d'informations, respectivement les faisceaux de lecture et d'enregistrement, ces faisceaux étant en outre réfléchis par ces zones; dispositif caractérisé en ce qu'il comporte:

— des premiers moyens optiques constituant une source d'énergie rayonnante pour générer ledit faisceau composite comprenant des première et seconde source fixes à lasers semiconducteurs emettant chacune un desdits faisceaux utilisés pour la lecture et l'écriture et munies de moyens stigmatiques pour rendre les faisceaux émis parallèles, ces sources étant polarisées linéairement suivant des première et seconde directions de polarisation orthogonales entre elles et émettant suivant des première et seconde directions d'émission, parallèles respectivement à des premier et second axes, un élément optique en matériau réfringent possédant un axe optique privilégié parallèle à l'une des directions de polarisation, cet élément transmettant suivant une direction parallèle au premier axe, le faisceau incident émis par l'une des sources, de direction de polarisation parallèle à l'axe optique privilégié sans modification et réfléchissant totalement suivant cette même direction le faisceau incident émis par l'autre source et un élément optique supplémentaire imposant aux deux faisceaux constituant le faisceau composite une polarisation linéaire commune;

— et des seconds moyens optiques disposés sur le premier axe comprenant un second élément optique en matériau réfringent possédant également un autre axe optique privilégié, destiné à transmettre tout ou partie du faisceau composite suivant une direction parallèle au premier axe le faisceau composite émergent ayant une direction de polarisation parallèle à cet autre axe optique; une lame quart-d'onde destinée à transformer la polarisation linéaire en polarisation circulaire, le faisceau composite ainsi polarisé étant transmis à la tête d'enregistrement-lecture; et une optique convergente disposée sur un troisième axe, le faisceau composite après réflexion sur le support d'information étant réfléchi totalement suivant une direction parallèle à cet axe par le second élément optique, l'optique convergente focalisant les deux composantes du faisceau composite en deux impacts distincts sur un organe optoélectronique de détection.

L'objet de l'invention est encore l'utilisation d'un tel dispositif dans une mémoire optique selon la revendication 9.

L'invention sera mieux comprise et d'autres caractéristiques et avantages apparaitront à l'aide de la description qui suit en référence aux figures annexées parmi lesquelles:

— la figure 1 est un dispositif d'enregistrement-lecture mettant en œuvre des sources d'énergie rayonnantes à lasers à gaz;
— la figure 2 est un diagramme explicatif d'un point particulier de l'invention;
— la figure 3 illustre une première variante d'exécution d'un dispositif optique d'enregistrement-lecture selon l'invention;
— les figures 4 et 5 illustrent le fonctionnement d'éléments optiques utilisés par le dispositif de l'invention;
— les figures 6 et 7 illustrent respectivement une deuxième et une troisième variante d'exécution d'un dispositif optique d'enregistrement-lecture selon l'invention;
— la figure 8 est une vue de détail d'un autre élément optique utilisé par le dispositif de l'invention.

L'invention concernant un dispositif optique d'enregistrement-lecture de supports d'information, notamment sous forme de disques, il est utile d'en rappeler les éléments constitutifs. On peut utiliser de tels disques soit pour inscrire des informations en un point déterminé d'une piste lisse inscrite au préalable, soit pour lire des informations inscrites en un point quelconque de cette piste. Comme il connu, le disque d'un diamètre d'environ 30 cm, est animé d'un mouvement de rotation qui lui est communiqué par un moteur d'entrainement solidaire du chassis du dispositif optique d'enregistrement-lecture.

L'invention concerne plus particulièrement les dispositifs du type comprenant une partie fixe constituée par les sources d'énergie lumineuse et une partie mobile constituée par la tête d'enregistrement-lecture. Cette dernière comprend un objectif du type microscope, solidaire d'une bobine électromagnétique se déplaçant dans le champ magnétique d'un aimant permanent assurant l'asservissement vertical et un miroir galvanométrique assurant l'asservissement radial.

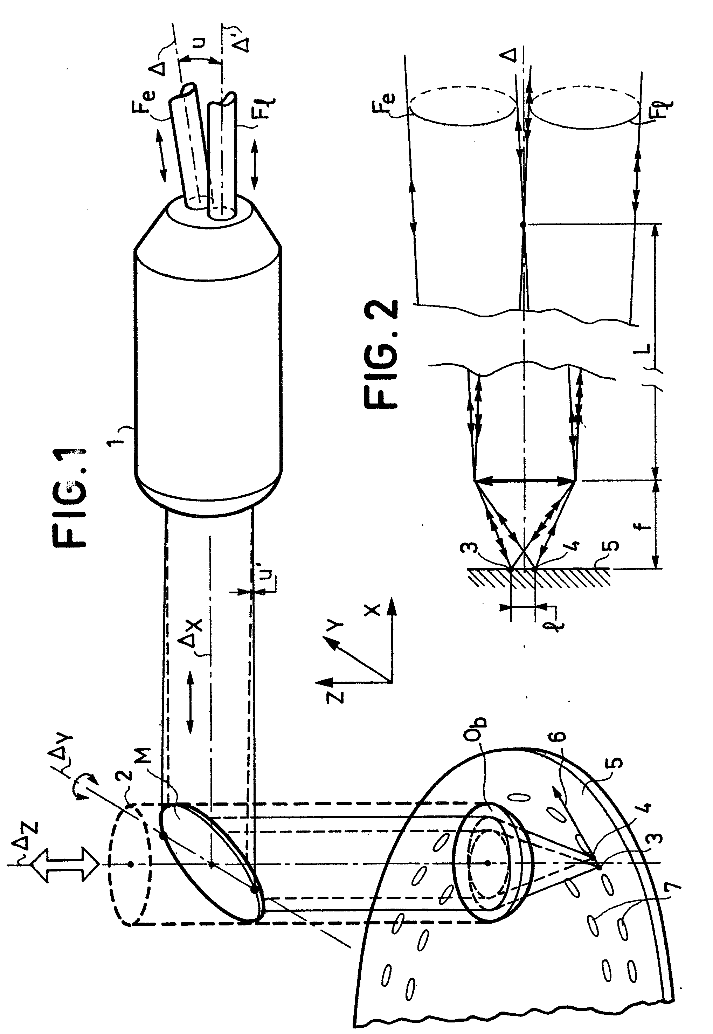

La figure 1 illustre un exemple de réalisation d'un dispositif optique d'enregistrement-lecture du type décrit ci-dessus et mettant en œuvre des sources lasers à gaz, pour produire l'énergie rayonnante, par exemple des lasers à gaz HeNe. Ces lasers émettent un faisceau parallèle polarisé. Comme il est connu, la section de ce faisceau est très faible et doit en conséquence être agrandie. Le dispositif comprend deux sources: une source émettant un faisceau de lecture $f_l$ et une source émettant un faisceau d'enregistrement $f_e$. Ces sources ne sont pas représentées sur la figure 1.

Pour la lecture, le faisceau $f_l$ parallèle et polarisé est agrandi à l'aide d'un afocal 1 dont le grossissement est tel que le faisceau émergeant, également parallèle, recouvre la pupille d'entrée d'un objectif $O_b$ de type microscope. Un miroir galvanométrique M est inséré entre l'afocal 1 et l'objectif $O_b$ de façon à dévier les rayons se propageant parallèlement à l'axe optique $\Delta_x$, suivant l'axe $\Delta_z$. Les axes $\Delta_x$ et $\Delta_z$ sont respectivement parallèles aux axes X et Y du trièdre de référence XYZ. L'objectif $O_b$ focalise le faisceau de lecture au point 3 sur le disque support d'information 5. Ce disque est animé d'un mouvement de rotation symbolisé par la flèche 6. L'objectif $O_b$ et le miroir M sont solidaires d'un équipage mobile 2 constituant la tête d'enregistrement-lecture. L'avance de cet ensemble mobile peut être obtenue par tout moyen connu et, par exemple non limitatif, soit à l'aide d'un ruban entrainé par des poulies (comme c'est le cas des traceurs de courbes), soit grâce à un écrou et une vis entrainant des billes (comme sur certains enregistreurs-lecteurs et des systèmes dits »Floppy-discs«), soit encore par un moteur linéaire. L'équipage mobile peut se mouvoir suivant l'axe $\Delta_z$, entrainé par des moyens d'asservissement de manière à ce que le faisceau de lecture se focalise exactement sur les pistes 7 portant les informations à lire. En outre le miroir M est mobile autor de l'axe $\Delta_y$ pour assurer un asservissement radial.

Un procédé bien connu pour enregistrer des informations consiste à former des microcuvettes ou plus généralement des microreliefs à la surface du disque 5 de longueur variable suivant la direction des pistes 7. Ces pistes se présentent sous la forme d'une spirale unique ou de cercles concentriques. La longueur variable des microcuvettes ou microreliefs est représentative d'une modulation en durée des informations à enregistrer.

Dans le cadre du dispositif de la figure 1, la lecture s'effectue par réflexion du faisceau de lecture focalisé en 3 sur une surface réfléchissante, par exemple un dépôt métallique effectué sur la face du disque portant les microcuvettes. Le faisceau de lecture est modulé spatialement par les microreliefs, cette modulation représentant les informations enregistrées sur la face lue du disque. Par effet de réciprocité, le faisceau réfléchi suit le même chemin qu'à l'aller et est détecté par des organes opto-électroniques (non représentés sur la figure 1). Les signaux ainsi détectés sont utilisés à plusieurs fins: outre leur utilisation pour la reconstitution des informations lues sur le disque 5, ces signaux sont également utilisés pour assurer les asservissements précédemment signalés. De tels procédés ont été décrits, à titre d'exemple non limitatif, dans les deux demandes de brevet suivantes: la demande de brevet français N° 75.29.705, déposé le 29 Septembre 1975 et publiée sous le N° 2 325 953; et la demande de brevet français N° 74.01.283, déposé le 15 Janvier 1974 et publiée sous le N° 2 271 590.

On utilise le même afocal pour le faisceau d'enregistrement, lequel ayant été préalablement modulé de façon classique. Afin de différencier les taches de lecture et d'enregistrement sur le disque 5 on incline très légèrement le faisceau d'enregistrement $f_e$ par rapport au faisceau de lecture $f_l$ d'un angle u' en sortie de l'afocal 1. Le grandissement transversal est donné par la relation $\gamma = \dfrac{h'}{h}$. Ce grandissement est choisi beaucoup plus grand que 1, il s'en suit que le rapport des angles $\dfrac{u'}{u}$ est inférieur à 1, u étant l'angle entre les axes $\Delta$ et $\Delta'$ des faisceaux de lecture $f_l$ et écriture $f_e$ à l'entrée de l'afocal. Le décentrement de la tache d'enregistrement sur la pupille d'entrée de l'objectif est donc très limité. On peut également négliger ce déplacement lors d'un déplacement radial de la tête. Il s'en suit que quelque soit la position de l'objectif le long de l'axe optique $\Delta_x$, le faisceau d'enregistrement est focalisé au foyer de l'objectif tout en assurant une bonne discrimination, en sortie de l'afocal, des faisceaux d'enregistrement $f_e$ et de lecture $f_l$ puisqu'inversement le rapport $\dfrac{u}{u'}$ est bien supérieur à 1.

La structure adoptée par ce dispositif d'enregistrement-lecture dissociant les sources d'énergie rayonnantes de la tête d'enregistrement-lecture proprement dite, permet de réduire la masse de l'équipage mobile à environ 200 grammes, dont 100 grammes pour le dispositif d'asservissement selon l'axe $\Delta_z$ et 30 grammes pour le miroir galvanométrique M et son dispositif d'entrainement, l'objectif ayant un poids négligeable. Cette masse réduite diminue l'inerte du dispositif d'enregistrement-lecture et permet un temps d'accès moyens à l'information suffisament faible pour les applications de l'informatique.

Le dispositif qui vient d'être décrit est parfaitement adapté à l'utilisation de sources lasers à gaz. Il n'en est pas de même si on utilise les sources à lasers semiconducteurs qui ont été introduites plus récemment. Ces lasers se présentent sous la forme d'un disque émissif et se caractérisant par une émission très divergente, dans un cône d'environ 30°. Ils nécessitent la mise en œuvre d'une optique collimatrice. L'ensemble est équivalent à une source d'émission de grand diamètre: typiquement 7 mm.

Il n'y a donc plus lieu d'utiliser un afocal, comme il vient d'être décrit, pour augmenter la section des faisceaux de lecture et d'enregistrement de façon à couvrir entièrement la pupille d'entrée de l'objectif d'enregistrement-lecture et obtenir ainsi un rendement suffisant.

Cependant, puisqu'il est mis en œuvre deux faisceaux différents, le premier pour l'enregistrement et le second pour la lecture, et que l'énergie de ces faisceaux, après leur réflexion sur le disque doit être détectée, soit pour élaborer des signaux restituant l'information lue, soit des signaux utilisés à des fins d'asservissement, il est donc nécessaire de discriminer les faisceaux réfléchis.

Or les deux faisceaux, respectivement d'enregistrement $f_e$ et de lecture $f_l$ doivent être focalisés sur le disque 5 en des endroits très rapprochés, pour que les taches d'enregistrement 4 et de lecture 3, soient pratiquement confondues pour rester dans le champ de l'objectif d'enregistrement-lecture $O_b$. La distance focale de cet objectif est habituellement très faible. Il s'en suit que l'angle u'que fait entre eux les deux faisceaux incidents de lecture et d'écriture est très faible.

Dans le cas du dispositif de la figure 1, comme il a été rappelé, l'utilisation d'un afocal 1 oblige les faisceaux d'enregistrement et de lecture réfléchis à faire entre eux un angle u important, ces faisceaux étant en outre de faible section, donc facile à discriminer spatialement.

Dans le cas des sources à lasers semiconducteurs, la section des faisceaux émis étant donc suffisante pour couvrir la pupille d'entrée de l'objectif de projection sans moyens optiques intermédiaires tel que l'afocal 1 et vu la courte distance focale de l'objectif d'enregistrement-lecture $O_b$ ainsi que la faible distance séparant les taches de lecture 3 et d'enregistrement 4, il est alors nécessaire de placer les organes de détection d'énergie des faisceaux réfléchis à une très grande distance de l'objectif $O_b$, ce qui conduit à des dispositifs encombrants.

Cet aspect est illustré par la figure 2. Si la distance entre les taches de lecture 3 et d'enregistrement 4 est l, la distance focale de l'objectif $O_b$ est f, l'angle u' qui font entre eux les faisceaux d'enregistrement $f_e$ et de lecture $f_l$ est donné par la relation: $u' = \dfrac{l}{f}$.

Il s'en suit que la distance L le long de l'axe optique $\Delta$ de l'objectif $O_b$, nécessaire pour obtenir une séparation spatiale totale des deux faisceaux d'enregistrement $f_e$ et de lecture $f_l$ est très importante, ce qui conduirait à des dispositifs d'enregistrement-lecture très encombrant comme il vient d'être rappelé.

Il est possible de mettre en œuvre des moyens optiques de discrimination permettant de diminuer cet encombrement. Cependant, ces moyens optiques ne doivent pas être cause de pertes énergétiques importantes. Ce serait le cas, par exemple, de miroirs semitransparents.

L'invention se propose de répondre à ces besoins.

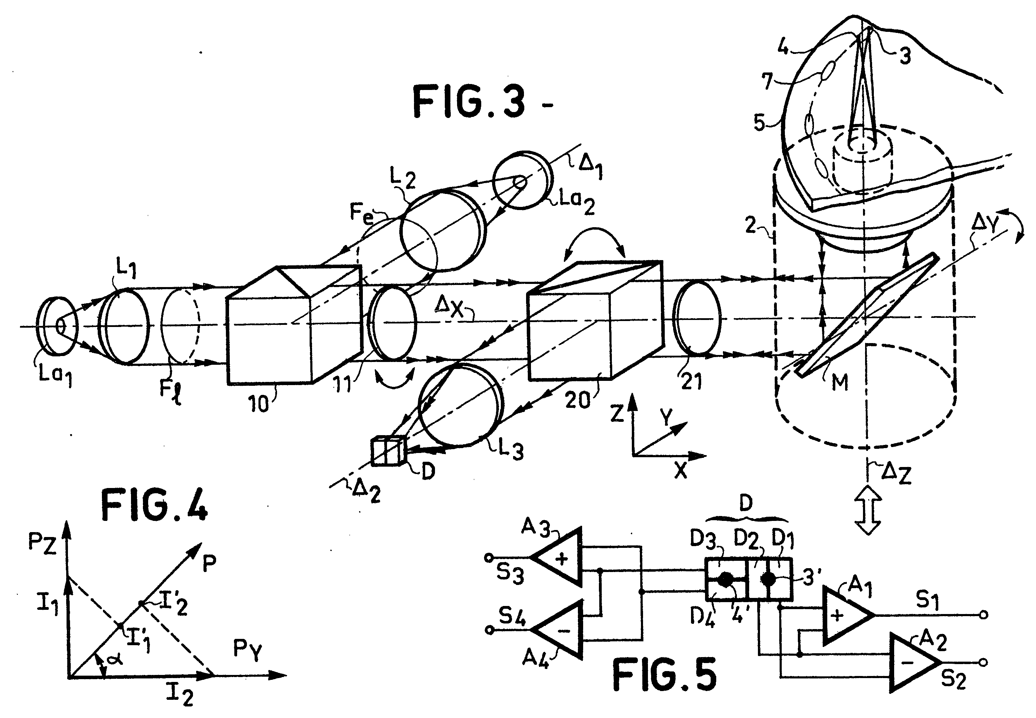

La figure 3 illustre une première variante d'exécution d'un dispositif optique d'enregistrement-lecture selon l'invention.

Ce dispositif comprend trois sous-ensembles. Un premier sous-ensemble constitue une source composite d'énergie rayonnante. Cette source est destinée à produire un faisceau composite, comportant deux composantes se présentant chacune sous la forme d'un faisceau parallèle polarisé, respectivement de lecture et d'enregistrement. Ces deux faisceaux sont légèrement inclinés l'un par rapport à l'autre comme il a été rappelé précédemment en relation avec les figures 1 et 2. Ce premier sous-ensemble comprend un premier laser semiconducteur $La_1$ associé à une optique collimatrice symbolisée par la lentille $L_1$ et un second laser semiconducteur $La_2$, également associé à une optique collimatrice $L_2$ qui peuvent être de type AsGa de longueur d'onde d'émission $\lambda = 830$ nm. Ces deux lasers émettent respective ment les composantes de lecture $F_l$ et d'enregistrement $F_e$. Ces deux composantes sont polarisées linéairement et leur direction de polarisation sont orthogonales entre elles. Les deux sources lasers ainsi constituées émettent suivant des directions sensiblement parallèles aux axes $\Delta_x$ et $\Delta_1$, parallèles aux axes X et Y d'un trièdre de référence XYZ.

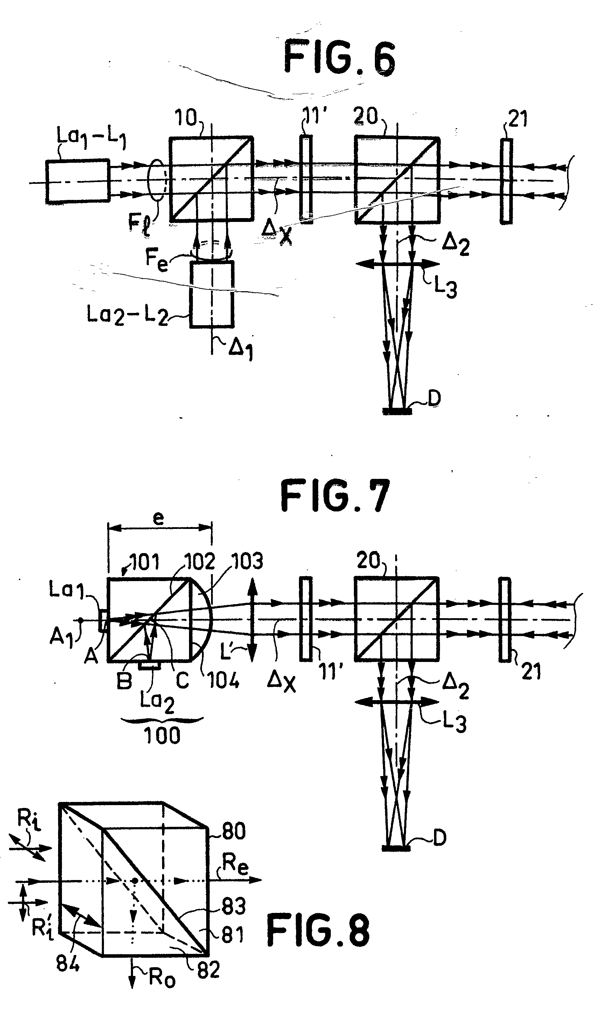

Ces deux composantes sont ensuite combinées par l'élément optique 10. Cet élément illustré de façon plus détaillée par la figure 8 peut être un parallélépipède en matériau réfringent. Dans une variante préférentielle de l'invention, il s'agit d'un cube 80 constitué de deux prismes collés 81 et 82. La surface de séparation 83 constituée par l'hypothénuse des deux prismes est traitée de façon à être séparatrice de polarisation. Cet élément présente un axe optique préférentiel 84. Les rayons incidents $R_i$ ayant une direction de polarisation parallèle à cet axe sont transmis en totalité sans modification suivant la direction d'émergence $R_e$, parallèle à la direction d'incidence, et les rayons incidents $R'_i$ ayant une direction de polarisation orthogonale à la direction précédente sont réfléchis en totalité suivant la direction d'émergence $R_o$ orthogonale à la direction d'incidence. Les faces du cube ont subi en outre un traitement de surface pour éviter les reflets parasites. Ce traitement est connu de l'homme de métier.

D'autres éléments optiques peuvent être utilisés dans le cadre de l'invention, c'est notamment le cas de certains polariseurs biréfringents tels que le prisme de GLAN. Il faut cependant sélectionner de préférence un polariseur transmettant les rayons incidents d'une première direction de polarisation sans modification et réfléchissant de façon totale les rayons de direction de polarisation orthogonale à la direction précédente.

L'effet qui vient d'être décrit est mis à profit par le dispositif de la figure 3. L'axe optique 84 étant parallèle à l'axe Z, la composante de

lecture $F_l$ est transmise sans modification par le cube 10, alors que la composante d'enregistrement $F_e$ est totalement réfléchie par ce cube. Il s'en suit que les deux composantes sont combinées par le cube 10 en un faisceau composite. Sur la figure 3, les composantes émergentes sont confondues. Dans la réalité ces deux composantes font entre elles un léger angle, équivalent à l'angle u' représente sur la figure 1.

Les deux composantes dont les directions de polarisation sont orthogonales traversent ensuite un élément optique 11 constitué par un polariseur dont l'axe optique fait un angle déterminé avec les directions de polarisation des composantes de lecture et d'enregistrement. Le but de cet élément polariseur 11 sera explicité ultérieurement en relation avec le diagramme de la figure 4.

Les deux composantes émergent de l'élément polariseur 11 avec une direction de polarisation commune, parallèle à celle du polariseur.

Le faisceau composite résultant traverse ensuite un second cube 20, identique au cube 10 précédemment décrit. Si ce cube est orienté convenablement les deux composantes de même direction de polarisation, respectivement de lecture et d'enregistrement, formant le faisceau composite, seront transmises intégralement par le cube 20. Ce cube 20 en combinaison avec des organes de détection comprenant l'optique convergente symbolisée par la lentille $L_3$ et des moyens opto-électroniques de détection D ainsi qu'une lame quart d'onde 21 placée en sortie du cube, constitue le deuxième sous-ensemble du dispositif optique d'enregistrement-lecture de l'invention.

Le but de la lame quart d'onde 21 est de transformer les polarisations linéaires des deux composantes du faisceau composite en une polarisation circulaire, par exemple dans le sens levogyre. L'axe optique de la lame doit faire un angle de $\pi/4$ radians avec la direction de polarisation du faisceau composite.

Le faisceau composite émergent de la lame quart d'onde 21 pénètre dans le troisième sous-ensemble du dispositif d'enregistrement-lecture de l'invention constitué par une tête d'enregistrement-lecture 2 en tous points identiques à celle de la figure 1. Comme pour le dispositif décrit en relation avec cette figure, seule la tête d'enregistrement-lecture est mobile par rapport aux pistes portant les informations 7. Les deux composantes du faisceau composite sont réfléchies par un miroir galvanométrique M, vers l'objectif $O_b$ pour être focalisées sur la face du disque portant les pistes d'informations 7, en deux taches respectivement de lecture 3 et d'enregistrement 4.

Après réflexion sur le disque les deux composantes du faisceau composite suivent le chemin optique inverse et sont toujours polarisées circulairement, mais dans le sens dextrogyre. A la traversée de la lame quart d'onde 21, le faisceau composite transmis du cube polariseur 20 est à nouveau polarisé linéairement. Mais la nouvelle direction de polarisation, commune aux deux composantes du faisceau composite après réflexion sur le disque, est orthogonale à celle du faisceau originel. Il s'en suit qu'à la traversée du cube 20 les deux composantes du faisceau composite vont être réfléchies par la face commune aux deux prismes de ce cube, ce suivant l'axe $\Delta_2$, orthogonal à l'axe $\Delta_x$.

Une optique de focalisation symbolisée par la lentille $L_3$ focalise les deux composantes du faisceau composite émergeant en deux taches spatialement distinctes, comprises dans un plan contenant les moyens optoélectroniques de détection D.

Le rôle de l'élément optique polariseur 11 va maintenant être explicité plus en détail à l'aide de la figure 4. Cet élément peut être un simple filtre polariseur.

Une fois recombiné par le cube 10, en un faisceau composite les deux composantes respectivement d'enregistrement et de lecture, ont des directions de polarisation linéaires orthogonales entre elles. Il est donc nécessaire d'obtenir une direction de polarisation commune pour que ces deux composantes soient transmises intégralement par le cube polariseur 20 sans réflexion parasite totale (ce qui impliquerait l'extinction d'une des deux composantes) ou partielle d'au moins une de ces deux composantes (ce qui peut être gênant). C'est un premier but de ce polariseur. Il permet en outre de doser, les intensités relatives des deux composantes du faisceau composite émergent. En effet, il est nécessaire de disposer du maximum d'énergie lors de l'enregistrement puisque le faisceau focalisé sert à créer au sein du matériau constituant le disque optique des perturbations par effet thermique. Il est suffisant par contre qu'au moins une fraction de l'intensité du faisceau de lecture soit transmise intégralement par le cube polariseur 20. L'utilisation d'un miroir semitransparent transmettant ou réfléchissant sélectivement deux composantes également polarisées n'aurait pas permis ce dosage.

Le diagramme de la figure 4 illustre cet aspect. Les composantes du faisceau composite émergeant du cube 10 ont des directions de polarisation $P_Z$ et $P_Y$, respectivement parallèles aux axes de référence Z et Y. Les intensités de ces composantes sont représentées par les vecteurs $I_1$ et $I_2$. Si le polariseur 11 a une direction de polarisation P, faisant un angle $\alpha$ avec la direction de polarisation $P_Y$ (c'est à dire avec l'axe Y), les intensités résultantes des deux composantes de lecture et d'enregistrement sont respectivement $I'_1$ et $I'_2$. Si les deux sources lasers sont identiques, on choisit l'angle $\alpha$ inférieur à $\pi/2$ radians de façon à favoriser la composante du faisceau composite utilisée pour l'enregistrement.

L'ensemble: cube 20, lame quart d'onde 21, lentille de polarisation $L_3$ et moyens optoélectroniques de détection D, doit être rendu mobile autor de l'axe $\Delta_X$ de manière à faire coïncider l'axe optique du cube 20 avec la direction de polarisation du polariseur 11. Ces deux éléments peuvent être accouplés mécaniquement. La rotation du cube 20 (et de la lame quart d'onde 21 qui lui est lié) autor de l'axe $\Delta_X$ n'apporte aucune perturbation au faisceau composite émergent car celui-ci a une symétrie de révolution puisque ses deux composantes sont polarisées circulairement à la sortie de la lame quart d'onde 21. D'autre part l'angle d'inclinaison des axes de symétrie des deux composantes est très faible, comme il a été rappelé, ces axes étant pratiquement confondus avec l'axe $\Delta_X$. De façon pratique cette légère inclinaison peut être obtenue par décentrement de l'une des sources lasers, par exemple par décentrement de la source laser La$_2$ par rapport à l'axe $\Delta_1$.

L'organe optoélectronique de détection D peut comprendre quatre photodiodes D$_1$ à D$_4$ disposées dans un plan perpendiculaire à l'axe $\Delta_2$, dans la configuration illustrée sur la figure 5. La lentille L$_3$ focalise sur le plan des photodiodes, des deux composantes du faisceau composite réfléchi en deux taches séparées respectivement de lecture 3' et d'enregistrement 4'.

Les signaux de sorties des photodiodes D$_1$ et D$_2$ sont transmises aux entrées de deux amplificateurs différentiels A$_1$ et A$_2$, le premier effectuant la somme des signaux de sortie des photodiodes D$_1$ et D$_3$, et le second la différence de ces mêmes signaux. Les signaux présents sur la sortie S$_1$ de l'amplificateur A$_1$ peuvent être utilisés pour élaborer des signaux représentant les informations lues sur le disque et les signaux présents sur la sortie S$_2$ de l'amplificateur A$_2$ pour élaborer des signaux d'asservissement vertical de la tête d'enregistrement-lecture 2 (figure 3).

Il en de même pour l'enregistrement. Les sorties des photodiodes D$_3$ et D$_4$ sont reliées à un troisième amplificateur différentiel A$_3$ effectuant la somme des signaux présents sur les sorties de ces photodiodes. Les signaux présents sur la sortie S$_3$ de l'amplificateur différentiel A$_3$ peuvent être utilisés pour élaborer des signaux représentant les signaux en cours d'enregistrement et contrôler ainsi cet enregistrement.

Le suivi radial de piste sur le disque peut être obtenu en utilisant le faisceau d'enregistrement, ce en connectant les sorties des photodiodes D$_3$ et D$_4$ à un quatrième amplificateur différentiel A$_4$, effectuant la différence des signaux de sortie des photodiodes D$_3$ et D$_4$. Les signaux présents sur la sortie S$_4$ de cet amplificateur différentiel A$_4$ peuvent être utilisés pour élaborer des signaux d'erreur.

Tous ces signaux sont transmis à des circuits électroniques de traitement bien connus de l'homme de métier. Le procédé d'obtention des signaux S$_1$ à S$_4$ est également connu et n'a été rappelé que pour préciser le fonctionnement du dispositif de l'invention.

Le dispositif optique d'enregistrement-lecture de l'invention permet donc une bonne discrimination des composantes respectives de lecture et d'enregistrement du faisceau composite, tout en restant compact et en conservant un bon rendement énergétique, en particulier pour la composante utilisée lors de l'enregistrement.

Le dispositif selon l'architecture décrite en relation avec la figure 3 nécessite cependant que les deux cubes 10 et 20 soient mobiles l'un par rapport à l'autre, de façon à faire coincider l'axe de polarisation du polariseur 11 avec l'axe optique du cube 20.

La figure 6 illustre un dispositif d'enregistrement-lecture conforme à l'invention dans lequel les deux cubes 10 et 20 sont fixes l'un par rapport à l'autre. Le polariseur 11 de la figure 3 a été remplacé par une lame demionde 11', orientable autor de l'axe $\Delta_X$. Comme il est connu, une lame demi-onde dont l'axe optique fait un angle avec l'axe de polarisation d'un faisceau polarisé fait tourner cet axe d'un angle $2\,\alpha$. Les composantes du faisceau composite émergeant du cube 10 vont donc voir leurs directions de polarisation tourner respectivement d'un angle $2\,\alpha$ et d'un angle

$$2\left(\frac{\pi}{2}-\alpha\right),$$

l'angle étant exprimé en radians. Le prisme 20 joue alors pour ces composantes le rôle d'un analyseur et transmet suivant l'axe $\Delta_X$ les deux composantes de lecture et d'enregistrement, dont l'intensité est égale à la projection des vecteurs représentant les intensités de ces mêmes composantes du faisceau composite à la sortie du cube 10 sur l'axe optique du cube 20, c'est à dire dans l'exemple choisi un axe parallèle à l'axe de référence Z. Les deux composantes ainsi transmises par le cube 20, ont une même direction de polarisation, celle de l'axe optique du cube. Les autres éléments sont identiques aux éléments décrits en relation avec la figure 3 et ne seront pas décrits à nouveau.

Enfin on peut substituer au prisme 10 et aux sources lasers La$_1$—L$_1$ et La$_2$—L$_2$, un dispositif optique stigmatique d'émission de rayonnement cohérent intégré. Un tel dispositif est décrit dans la demande de brevet EP-A-0 029 755, notamment par la figure 3 de cette demande.

Cette variante d'exécution de la présente invention est illustrée par la figure 7.

L'élément 100 comprend un parallélépipède 101. Sauf mention contraire, dans la suite de la description, il s'agit d'un cube constitué de deux prismes droits collés. La surface de séparation 102 constituée par l'hypothénuse des deux prismes est traitée de façon à être séparatrice de polarisation: elle transmet en totalité des rayonnements ayant une polarisation donnée et elle réfléchit en totalité des rayonnements ayant une direction de polarisation orthogonale à la précédente. Une lentille plan-convexe 103, formée du même matériau que le cube, est collée sur l'une des faces 104 du cube. Le centre C de la sphère formée par la face convexe de la lentille 103 est située sur un plan médian du cube. Son rayon de courbure R est tel que le point A situé au point de rencontre de l'axe optique $\Delta_X$ de la lentille 102 avec la face du cube opposée à la face 102 soit un point de Weierstrass du dioptre constitué par la surface sphérique de la lentille 103. En d'autres termes, le bloc optique constitué du cube 101 et de la lentille 103 forme du point A une image stigmatique au point $A_1$, dont on sait qu'elle est virtuelle si A est réel. Les conditions de Weierstrass s'énoncent ainsi: lorsque l'indice de réfraction commun au cube et à la lentille est n et lorsque le milieu extérieur est l'air:

$$CA = \frac{R}{n}, \quad CA_1 = nR.$$

La première condition donne la relation entre l'épaisseur e de l'ensemble et le rayon R:

$$R : R = e \frac{n}{n+1}.$$

Lorsque cette relation est vérifiée, si on place en A une source de rayonnement polarisé dans la direction correspondant à une transmission par la face 102, émettant un faisceau divergent de demi-angle au sommet $\beta_0$, dans l'air, cet angle devient $\beta$ dans le cube et le faisceau émergent de la lentille, issu du point virtuel $A_1$, a un demi-angle au sommet $\beta_1$ avec

$$\sin \beta_1 = \frac{\sin \beta}{n} \quad \text{et} \quad \sin \beta = \frac{\sin \beta_0}{n}.$$

Par ailleurs, l'élément 101 étant cubique, le point B conjugué de A par rapport à la face 102 est situé sur une autre face du cube et est également un point stigmatique.

Un faisceau issu de B de direction de polarisation orthogonale à celle du faisceau issu de A est réfléchi par la face 102 et se superpose au faisceau issu de A. Le fait que le parallélépipède 100 et la lentille 102 soient décrits comme deux éléments séparés n'est pas nécessaire. Le bloc optique 100—103 peut également être réalisé de telle sorte que la face 104 ne soit pas matérialisée.

L'élément 100 décrit est destiné à être utilisé en association avec des lasers semiconducteurs $La_1$ et $La_2$ ayant leur centre de phase en A et B. Un objectif symbolisé par la lentille L' d'axe optique confondu avec l'axe $\Delta_X$ est placé derrière la lentille 103, de façon à ce que son foyer soit au point $A_1$. Cet objectif est conçu de façon à ne pas présenter d'aberrations sphériques pour les ouvertures de faisceau maximale fournies par les lasers placés en A et B, l'ensemble du système optique devant rester stigmatique. Il peut s'agir par exemple d'un doublet et on obtient donc les faisceaux parallèles composites des dispositifs précédemment décrits en relation avec les figures 3 et 6.

On retrouve ensuite la lame demi-onde 11' de la figure 6, ainsi que les autres éléments communs aux figures 3 et 6. Cette lame peut être remplacée par un polariseur comme c'est le cas dans la variante d'exécution de la figure 3. Dans cette éventualité l'élément 100 doit être rend'ı mobile autor de l'axe $\Delta_X$.

L'invention n'est pas limitée aux seules variantes d'exécution qui viennent d'être décrites. Notamment, les éléments 10 ou 20 peuvent être constitués par tout élément optique transmettant intégralement un faisceau polarisé suivant une seconde direction orthogonale à la première direction de polarisation, la direction de réflexion n'étant pas nécessairement orthogonale à la direction de transmission. L'angle que font ces deux directions doit cependant être suffisament important pour faciliter la réalisation pratique du dispositif de l'invention.

**Revendications**

1. Dispositif optique d'enregistrement-lecture de support d'information (5) du type comportant deux sources d'énergie rayonnante fixes à laser semiconducteur de longueur d'onde déterminée, la première source ($La_1$) émettant un premier faisceau ($F_l$) utilisé pour la lecture d'informations enregistrées sur le support d'informations et la seconde source émettant un second faisceau ($F_e$) utilisé pour l'enregistrement d'informations (7) sur le support d'information, dispositif dans lequel l'enregistrement et la lecture s'effectuent au moyen d'une tête d'enregistrement-lecture (2) solidaire d'un équipage mobile par rapport au support d'informations (5) et comprenant un objectif ($O_b$) recevant lesdits faisceaux se propageant suivant deux directions formant entre-elles un angle de faible amplitude et dont la combinaison forme un faisceau composite, cet objectif focalisant en des zones prédéterminées (7) du support d'informations (5), respectivement les faisceaux de lecture ($F_l$) et d'enregistrement ($F_e$), ces faisceaux étant en outre réfléchis par ces zones (7); dispositif caracterisé en ce qu'il comporte:

— des premiers moyens optiques constituant une source d'énergie rayonnante pour générer ledit faisceau composite comprenant des première et seconde sources fixes à lasers semiconducteurs ($La_1$, $La_2$) émettant chacune un desdits faisceaux utilisés pour la lecture et l'écriture et munies de moyens stigmatiques ($L_1$, $L_2$) pour rendre ces faisceaux parallèles ces sources étant polarisées linéairement suivant des première et seconde directions de polarisation orthogonales entre elles et émettant suivant les première et seconde directions d'émission, parallèles respectivement à des premier ($A_X$) et second ($A_1$) axes un élément optique (10) en matériau réfringent possédant un axe optique privilégié (84) parallèle à l'une des directions de polarisation, cet élément (10) transmettant suivant une direction parallèle (La₁) au premier axe ($\Delta_X$) le faisceau incident émis par l'une des sources de direction de polarisation parallèle à l'axe optique privilégié dans modification et réfléchissant totalement suivant cette même direction le faisceau incident émis par l'autre source (La₂) et un élément optique supplémentaire (11 ou 11') imposant aux deux faisceaux constituant le faisceau composite une polarisation linéaire commune (P);

— et des seconds moyens optiques disposés sur le premier axe ($\Delta_X$) comprenant un second élément optique (20) en matériau réfringent possédant également un autre axe optique privilégié, destiné à transmettre tout ou partie du faisceau composite suivant une direction parallèle au premier axe ($\Delta_X$) le faisceau composite émergent ayant une direction de polarisation parallèle à cet autre axe optique; une lame quart-d'onde (21) destinée à transformer la polarisation linéaire en polarisation circulaire, le faisceau composite polarisé étant transmis à la tête d'enregistrement-lecture (2); et une optique convergente (L₃) disposée sur un troisième axe ($\Delta_2$) le faisceau composite après réflexion sur le support d'information étant réfléchi totalement suivant une direction parallèle à cet axe par le second élément optique (20) et l'optique convergente (L₃) focalisant les deux composantes du faisceau composite en deux impacts distincts (3', 4') sur un orange optoélectronique de détection (D).

2. Dispositif selon la revendication 1, caractérisé en ce que l'élément optique supplémentaire est un polariseur (11) d'axe de polarisation (P) faisant un angle déterminé ($\alpha$) avec l'axe optique (84) du premier élément optique (10), transmettant les premier et second faisceaux formant les deux composantes du faisceau composite avec une direction de polarisation unique parallèle à l'axe de polarisation (P) et en ce que l'axe optique du second élément optique est parallèle à l'axe de polarisation.

3. Dispositif selon la revendication 2, caractérisé en ce que le polariseur (11) est mobile par rotation autor du premier axe ($\Delta_X$) de façon à rendre réglable la valeur de l'angle déterminé ($\alpha$), le second élément optique (20) étant également rendu mobile autor de cer axe de façon à ce que son axe optique reste parallèle à l'axe de polarisation (P) du polariseur (11).

4. Dispositif selon la revendication 1, caractérisé en ce que l'élément optique supplémentaire est une lame demi-onde (11') dont l'axe optique fait un angle déterminé ($\alpha$) avec l'axe optique (84) du premier élément optique (10), destinée à faire tourner les directions de polarisation des premier et second faisceaux formant le faisceau

composite, chacun d'un angle d'amplitude double de celle de l'angle déterminé; l'axe optique du second élément (20) étant parallèle à l'axe optique (84) du premier élément (10).

5. Dispositif selon la revendication 4, caractérisé en ce que la lame demi-onde (11') est rendue mobile par rotation autor du premier axe ($\Delta_X$) de façon à rendre réglable la valeur de l'angle déterminé ($\alpha$).

6. Dispositif selon la revendication 1, caractérisé en ce que les premier et second éléments optiques (10, 20) sont constitués chacun par un cube (80) réalisé par l'accolement de deux prismes droits en matériau réfringent (81, 82), la surface de séparation (83) constituée par l'hypothénuse des deux prismes étant traitée de façon à être séparatrice de polarisation, le cube présentant un axe optique privilégié (84) de sorte qu'un faisceau incident (Rᵢ) polarisé linéairement de direction parallèle à cet axe optique soit transmis sans modification et qu'un faisceau polarisé linéairement suivant une direction orthogonale à cet axe soit totalement réfléchi, les directions de transmission (Rₑ) et de réflexion (Rₒ) étant orthogonales entre elles.

7. Dispositif selon la revendication 1, caractérisé en ce que le premier élément optique (100) est un bloc optique (101) en matériau réfringent délimité par une première face plane et une face convexe de forme sphérique, l'un des points de Weierstrass (A) du dioptre formé par la face convexe étant situé sur la première face plane, celle-ci étant perpendiculaire à la droite ($\Delta_X$) joignant ce point de Weierstrass et le centre de la face sphérique (C) et en ce que le bloc optique est constitué de deux prismes droits accolés, la surface de séparation (102) entre ces deux prismes étant inclinée selon la bissectrice du dièdre formé par la première face plane et une deuxième face plane du parallélépipède, une lentille plan-convexe (103) étant accolée sur une troisième face plane opposée à la première face plane.

8. Dispositif selon la revendication 7, caractérisé en ce que la première source (La₁) est placée au voisinage du point de Weierstrass (A) situé sur la première face plane et la seconde source (La₂) placée au voisinage du point conjugué (B) du point de Weierstrass par rapport à la surface de séparation (103), la surface de séparation entre les deux prismes étant totalement transmissive pour le faisceau issu de la première source (La₁) et totalement réfléchissante pour le faisceau issu de la seconde source (La₂), une optique stigmatique (L') étant en outre placée à l'extérieur du bloc optique sur le trajet des faisceaux émis par les première et seconde sources de façon à rendre les faisceaux émergents parallèles.

9. Système de mémoire optique caractérisé en ce qu'il comprend un dispositif d'enregistrement-lecture de support d'informations selon l'une quelconque des revendications 1 à 8.

**Patentansprüche**

1. Optische Vorrichtung zur Aufnahme und Wiedergabe von Informationsträgern (5), welche zwei feststehende strahlende Energiequellen mit Halbleiterlaser von bestimmter Wellenlänge umfassen, wobei die erste Quelle (La$_1$) einen ersten Bündel (F$_l$) emittiert, der zur Wiedergabe von auf dem Informationsträger aufgenommenen Informationen verwendet wird und wobei die zweite Quelle einen zweiten Bündel (F$_e$) emittiert, der zur Aufnahme von Informationen (7) auf dem Informationsträger verwendet wird, Vorrichtung, in der die Aufnahme und die Wiedergabe mit Hilfe eines Aufnahme-Wiedergabe-Kopfes (2) stattfinden, der mit einer Ausstattung fest verbunden ist, die beweglich ist in bezug auf den Informationsträger (5) und ein Objektiv (O$_b$) umfaßt, das die Bündel empfängt, die sich in zwei unter sich einen Winkel mit schwacher Amplitude bildende Richtungen fortpflanzen und deren Verbindung ein zusammengesetztes Bündel bildet, wobei dieses Objektiv den Wiedergabebündel (F$_l$) und den Aufnahmebündel (F$_e$) jeweils in vorbestimmte Zonen (7) des Informationsträgers (5) fokussiert, wobei diese Bündel zudem durch diese Zonen reflektiert werden, welche Vorrichtung, dadurch gekennzeichnet ist, daß sie umfaßt:

— erste optische Mittel, die eine strahlende Energiequelle bilden, um den zusammengesetzten Bündel zu produzieren, welche Mittel erste und zweite feststehende Quellen mit Halbleiterlasern (La$_1$, La$_2$) umfassen, wobei jede einen dieser Bündel zur Wiedergabe und Aufnahme benützt und die mit stigmatischen Mitteln (L$_1$, L$_2$) ausgestattet sind, um diese Bündel parallel zu bilden, wobei diese Quellen nach ersten und zweiten unter sich rechteckigen Polarisationsrichtungen, linear polarisiert sind und nach den ersten und zweiten Emissionsrichtungen jeweils parallel zu ersten (A$_x$) und zweiten (A$_1$) Achsen emittieren, welche Mittel aus strahlenbrechendem Material bestehendes optisches Element (10) umfassen, das eine privilegierte, zu einer der Polarisationsrichtungen parallele optische Achse (84) besitzt, wobei dieses Element (10) nach einer zur ersten Achse (Δ$_x$) parallelen Richtung (La$_1$) das einfallende Bündel ohne Veränderung überträgt, welches von einer der Quellen emittiert wird, deren Polarisationsrichtung parallel zur privilegierten optischen Achse ist und das nach dieser selben Richtung den einfallenden von einer der anderen Quelle (La$_2$) emittierten Bündel vollständig reflektiert, und welche Mittel ein zusätzliches optisches Element (11 oder 11') umfassen, das den beiden, das zusammengesetzte Bündel bildenden Bündel eine gemeinsame lineare Polarisation (P) auferlegt;

— und zweite optische auf der ersten Achse (Δ$_x$) angebrachte Mittel, welche Mittel ein zweites aus strahlenbrechendem Material bestehendes optisches Element (20) umfassen, das auch eine andere privilegierte optische Achse besitzt und dazu bestimmt ist ganz oder teilweise das zusammengesetzte Bündel nach einer zur ersten Achse (Δ$_x$) parallelen Richtung zu übertragen, wobei der zusammengesetzte austretende Bündel eine zu dieser anderen optischen Achse parallele Polarisationsrichtung hat; welches Mittel ein Viertel-Wellen-Plättchen (21) umfaßt, das dazu bestimmt ist die lineare Polarisation in eine zirkulare Polarisation umzuformen, wobei das polarisierte zusammengesetzte Bündel auf den Aufnahme-Wiedergabe-Kopf (2) übertragen wird; und welches Mittel einen auf einer dritten Achse (Δ$_2$) angebrachten konvergierenden optischen Satz (L$_3$) umfaßt, wobei das zusammengesetzte Bündel in Reflexion auf dem Informationsträger nach einer zu dieser Achse parallelen Richtung durch das zweite optische Element (20) vollständig reflektiert wird und wobei der konvergierende optische Satz die beiden Komponenten des zusammengesetzten Bündels in zwei verschiedenen Einfallspunkten (3', 4') auf einen optoelektronischen Detektor (D) fokussiert.

2. Vorrichtung nach Anspruch 1, dadurch gekennzeichnet, daß das zusätzliche optische Element ein eine Polarisationsachse (P) besitzender Polarisator (11) ist, die mit der optischen Achse (84) des ersten optischen Elements (10) einen bestimmten Winkel ($\alpha$) bildet, wobei der Polarisator die ersten und zweiten, Bündel die beiden Komponenten des zusammengesetzten Bündels bildenden in einer einzigen zu der Polarisationsachse (P) parallelen Polarisationsrichtung überträgt, und daß die optische Achse des zweiten optischen Elements parallel zur Polarisationsachse ist.

3. Vorrichtung nach Anspruch 2, dadurch gekennzeichnet, daß der Polarisator (11) um die erste Achse (Δ$_x$) drehbar ist, um den Wert des bestimmten Winkels ($\alpha$) zu regulieren, wobei das zweite optische Element (20) auch um diese Achse beweglich gemacht ist, so daß seine optische Achse zur Polarisationsachse (P) des Polarisators (11) parallel bleibt.

4. Vorrichtung nach Anspruch 1, dadurch gekennzeichnet, daß das zusätzliche optische Element ein Halb-Wellen-Plättchen (11') ist, dessen optische Achse einen bestimmten Winkel ($\alpha$) mit der optischen Achse (84) des ersten optischen Elements (10) bildet und dazu bestimmt ist die Polarisationsrichtungen der das zusammengesetzte Bündel bildenden ersten und zweiten Bündel jeweils in einem Winkel drehbar zu machen, der die doppelte Größe des bestimmten Winkels besitzt; und die optische Achse des zweiten Elements dabei zu der optischen Achse (84) des ersten Elements (10) parallel ist.

5. Vorrichtung nach Anspruch 4, dadurch gekennzeichnet, daß das Halb-Wellen-Plättchen (11') um die erste Achse drehbar gemacht ist, um den Wert des bestimmten Winkels ($\alpha$) regulierbar zu machen.

6. Vorrichtung nach Anspruch 1, dadurch gekennzeichnet, daß die ersten und zweiten optischen Elemente (10, 20) jeweils durch einen Würfel (80) gebildet sind, der durch das Verbinden von zwei aus strahlenbrechendem Material bestehenden Prismen (81, 82) hergestellt ist, wobei die durch die Hypothenuse der zwei Prismen gebildete Trennfläche (83) so bearbeitet ist, daß sie die Polarisationstrennung erlaubt, und wobei der Würfel eine privilegierte optische Achse (84) darstellt, so daß ein einfallender in paralleler Richtung zu dieser optischen Achse linear polarisierter Bündel ($R_i$) ohne Veränderung übertragen wird und daß ein in einer zu dieser Achse orthogonalen Richtung linear polarisiertes Bündel vollständig reflektiert wird, wobei die Richtungen der Übertragung ($R_e$) und Reflektierung ($R_o$) untereinander orthogonal sind.

7. Vorrichtung nach Anspruch 1, dadurch gekennzeichnet, daß das erste optische Element (100) ein optischer Block (101) aus strahlenbrechendem Material ist, der durch eine erste flache Seite und eine konvexe kugelförmige Seite begrenzt ist, wobei einer der Weierstraßpunkte (A) des durch die konvexe Seite gebildeten Diopters auf der ersten flachen Seite liegt, diese dabei zu der diesen Weierstraßpunkt und Mittelpunkt der kugelförmigen Seite (C) verbindenden Geraden ($\Delta_x$) senkrecht ist, und dadurch daß der optische Block aus zwei zusammengefügten rechten Prismen gebildet ist, wobei die Trennfläche (102) zwischen diesen zwei Prismen entsprechend der Winkelhalbierenden des von der ersten flachen Seite und einer zweiten flachen Seite des Parallelepipedon gebildeten Flächenwinkels geneigt ist, und wobei eine flach-konvexe Linse (103) mit einer der ersten flachen Seite gegenüberliegenden dritten flachen Seite verbunden ist.

8. Vorrichtung nach Anspruch 7, dadurch gekennzeichnet, daß die erste Quelle ($La_1$) in der Nähe des auf der ersten flachen Seite gelegenen Weierstraßpunkts (A) liegt und die zweite Quelle ($La_2$) in der Nähe des konjungierten Punkts (B) des Weierstraßpunkts in Verhältnis zur Trennungsoberfläche (103), wobei die Trennungsoberfläche zwischen den zwei Prismen vollständig übertragungsfähig für den von der ersten Quelle ($La_1$) ausgehenden Bündel und vollständig reflektierend für den von der zweiten Quelle ($La_2$) ausgehenden Bündel ist, und zudem eine stigmatische Optik (L') außerhalb des optischen Blocks auf der Strecke der durch die ersten und zweiten Quellen emittierten Bündel sich befindet.

9. Optisches Speichersystem, dadurch gekennzeichnet, daß es eine Vorrichtung zur Aufnahme-Wiedergabe von Informationsträgern nach einem der Ansprüche 1 bis 8 umfaßt.

## Claims

1. Optical register reading device for data support (5) of the type comprising two stationary radiating energy sources having a determined wave length semi-conductor laser, the first source ($La_1$) emitting a first beam ($F_l$) used for the reading of data which are registered on the data support and the second source emitting a second beam ($F_e$) used for the registering of data (7) on the data support, device in which the registering and the reading are carried out by means of a registering reading head (2) integral with a mobile equipment with respect to the data support (5) and comprising an objective ($O_b$) receiving the said beams propagating along two directions forming between them a low amplitude angle and the combination of which forms a composite beam, this objective focussing in predetermined zones (7) of the data support (5), respectively the reading ($F_l$) and the registering ($F_e$) beams, these beams being, furthermore, reflected by these zones (7); device characterized in that it comprises:

— first optical means constituting a radiating energy source to generate the said composite beam comprising the first and second semi-conductor laser fixed supplies ($La_1$, $La_2$) each emitting one of the said beams used for the reading and the writing and provided with stigmatic means ($L_1$, $L_2$) to render these beams parallel, these sources being polarised linearly along the first and second polarization directions orthogonal between each other and emitting along the first and second emitting directions, respectively parallel to first ($A_X$) and second ($A_l$) axes, an optical element (10) of refringent material possessing a privileged optical axis (84) parallel to one of the polarization directions, this element (10) transmitting along a direction ($La_1$) parallel to the first axis ($\Delta_X$), the incident beam emitted by one of the sources having a polarization direction parallel to the privileged optical axis without modification and totally reflecting along this same direction the incident beam emitted by the other source ($La_2$) and a supplementary optical element (11 or 11') imposing on the two beams constituting the composite beam a common linear polarization (P);

— and second optical means disposed on the first axis ($\Delta_X$) comprising a second optical element (20) of refringent material also possessing another privileged optical axis, destined to transmit all or part of the composite beam along a direction parallel to the first axis ($\Delta_X$) the emergent composite beam having a polarization direction parallel to this other optical axis, a quarter-wave blade (21) destined to transform the linear polarization into a circular polarization, the polarized composite beam being transmitted to the registering reading head (2); and a convergent optica (L₃) disposed on a third axis ($\Delta_2$), the composite beam after reflection on the data support being totally reflected along a direction parallel to this axis by the second optical element (20) and the convergent optica (L₃) focusing the two components of the composite beam in two distinct impacts (3', 4') on an electro-optical detection element (D).

2. Device according to claim 1, characterized in that the supplementary optical element is a polarizer (11) the polarization axis (P) of which forms a determined angle ($\alpha$) with the optical axis (84) of the first optical element (10), transmitting the first and second beams forming the two components of the composite beam with a single polarization direction parallel to the axis of polarization (P) and in that the optical axis of the second optical element is parallel to the axis of polarization.

3. Device according to claim 2, characterized in that the polarizer (11) is mobile by rotation about a first axis ($\Delta_x$) so as to render adjustable the value of the determined angle ($\alpha$), the second optical element (20) also being rendered mobile about this axis so that its optical axis remains parallel to the polarization axis (P) of the polarizer (11).

4. Device according to claim 1, characterized in that the supplementary optical element is a half-wave blade (11') the optical axis of which forms a determined angle ($\alpha$) with the optical axis (84) of the first optical element (10), destined to cause the polarization directions of the first and second beams forming the composite beam each to turn of an angle the amplitude of which is twice that of the determined angle; the optical axis of the second element (20) being parallel to the optical axis (84) of the first element (10).

5. Device according to claim 4, characterized in that the half-wave blade (11') is rendered mobile by rotation about the first axis ($\Delta_x$) so as to render adjustable the value of the determined angle ($\alpha$).

6. Device according to claim 1, characterized in that the first and second optical elements (10, 20) are each constituted by a cube (80) realized by the joining of two straight prisms of refringent material (81, 82), the separation surface (83) constituted by the hypotenuse of the two prisms being processed so as to be a polarization separator, the cube presenting a privileged optical axis (84) so that a linearly polarized incident beam (R_i) having a direction parallel to this optical axis be transmitted without modification and that a linearly polarized beam along a direction orthogonal to this axis be totally reflected, the transmission (R_e) and reflection (R_o) directions being orthogonal between them.

7. Device according to claim 1, characterized in that the first optical element (100) is an optical block (101) of refringent material delimited by a first plane face and a convex face having a spherical shape, one of the Weierstrass points (A) of the diopter formed by the convex face being situated on the first plane face, this being perpendicular to the straight line ($\Delta_x$) joining this Weierstrass point and the centre of the spherical face (C) and in that the optical block is constituted by two straight joined prisms, the separation surface (102) between these two prisms being inclined along the bisectrix of the dihedron formed by the first plane face and a second plane face of the parallelepiped, a plane-convex lens (103) being joined on a third plane face opposite the first plane face.

8. Device according to claim 7, characterized in that the first source (La₁) is placed adjacent to the Weierstrass point (A) situated on the first plane face and the second source (La₂) placed adjacent to the conjugated point (B) of the Weierstrass point with respect to the separation surface (103), the separation surface between the two prisms being totally transmissive for the beam issuing from the first source (La₁) and totally reflective for the beam issuing from the second source (La₂), a stigmatic optica (L') being furthermore placed outside the optical block on the path of the beams emitted by the first and second sources so as to render the emergent beams parallel.

9. Optical memory system, characterized in that it comprises a data support registering-reading device according to any one of claims 1 to 8.

FIG.1

FIG.2

0 040 995

# FIG.3 -

# FIG.4

# FIG.5

0 040 995

# FIG. 6

# FIG. 7

# FIG. 8